(19) Europäisches Patentamt
European Patent Office
Office européen des brevets

(11) **EP 4 310 541 A1**

(12) **EUROPÄISCHE PATENTANMELDUNG**

(43) Veröffentlichungstag:
**24.01.2024 Patentblatt 2024/04**

(21) Anmeldenummer: **22186057.0**

(22) Anmeldetag: **20.07.2022**

(51) Internationale Patentklassifikation (IPC):
**G01S 7/499** (2006.01)   **F16P 3/14** (2006.01)
**G01S 17/34** (2020.01)   **G01S 17/42** (2006.01)
**G01S 17/58** (2006.01)   **G01S 17/89** (2020.01)

(52) Gemeinsame Patentklassifikation (CPC):
**G01S 17/58; F16P 3/147; G01S 7/499;
G01S 17/34; G01S 17/42; G01S 17/89**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **SICK AG**
**79183 Waldkirch (DE)**

(72) Erfinder:
- **Jarvis, Jan**
  **79104 Freiburg (DE)**
- **Ruh, Dominic**
  **79102 Freiburg (DE)**
- **Wittmeier, Steffen**
  **Waldkirch (DE)**

(54) **VORRICHTUNG UND VERFAHREN ZUR ERFASSUNG VON OBJEKTEN IN EINEM ÜBERWACHUNGSBEREICH**

(57) Es wird eine Vorrichtung und ein Verfahren zum Absichern eines Überwachungsbereiches mit wenigstens einem FMCW-LiDAR-Sensor zum Aussenden von Sendelichtstrahlen in den Überwachungsbereich angegeben. Der FMCW-LiDAR-Sensor tastet eine Vielzahl von Messpunkten im Überwachungsbereich ab und erzeugt Messdaten aus von den Messpunkten remittiertem oder reflektiertem Sendelicht. Eine Steuer- und Auswerteeinheit wertet die Messdatenaus und erzeugt ein sicherheitsgerichtetes Signal basierend auf der Auswertung. Die Messdaten umfassen Radialgeschwindigkeiten der Messpunkte und polarisationsabhängige Intensitäten des von den Messpunkten remittierten oder reflektierten Sendelichts. Die Steuer- und Auswerteeinheit ist dazu ausgebildet, die Messpunkte unter Verwendung der Radialgeschwindigkeiten und der und polarisationsabhängige Intensitäten zu segmentieren und zu Objekten und/oder Objektsegmenten zusammenzufassen.

Fig. 1

EP 4 310 541 A1

## Beschreibung

Die Erfindung betrifft eine Vorrichtung und ein Verfahren zur Erfassung von Objekten in einem Überwachungsbereich nach dem Oberbegriff von Anspruch 1 beziehungsweise Anspruch 11.

Zur Erfassung von Objekten werden häufig optoelektronische Sensoren wie Laserscanner oder 3D-Kameras eingesetzt, beispielsweise für sicherheitstechnische Überwachungen. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder spezielle Überwachung der Verschmutzung optischer Bauteile.

In der DE 10 2007 007 576 A1 wird eine Maschine dadurch abgesichert, dass eine Vielzahl von Laserscannern ein dreidimensionales Bild ihres Arbeitsraums aufnehmen und diesen Ist-Zustand mit einem Soll-Zustand vergleichen. Die Laserscanner werden am Rand des Arbeitsraums auf Stativen in unterschiedlicher Höhe positioniert. Anstelle von Laserscannern können auch 3D-Kameras verwendet werden.

Aus der DE 198 43 602 A1 ist ein Verfahren und eine Vorrichtung zum Erfassen der Bewegungen von Prozesseinheiten während eines Produktionsprozesses in einem vorgegebenen Auswertebereich bekannt. Mindestens zwei ortsfest im Auswertebereich angeordnete Kameras kommen zur Anwendung. Es werden kontinuierlich Ortskoordinaten jeder Prozesseinheit erfasst und zu jeder Ortskoordinate ein die Bewegung der jeweiligen Prozesseinheit beschreibender Translationsvektor ermittelt.

Die US 9 804 576 B2 offenbart eine erkennungsbasierte, industrielle Automatisierungssteuerung, die dazu eingerichtet ist, Personenbewegungen zu erkennen, für die Zukunft abzuleiten und mit geplanten Automatisierungsbefehlen abzugleichen, um gegebenenfalls weitere sicherheitsgerichtete Aktionen (Alarme oder geänderte Steuerungsbefehle) abzuleiten, wobei zur Erkennung der Personenbewegungen 3D Kameras verwendet werden.

Die DE 10 2006 048 163 B4 beschreibt eine kamerabasierte Überwachung bewegter Maschinen und/oder beweglicher Maschinenelemente zur Kollisionsverhinderung, wobei mit Hilfe eines Bilderfassungssystems Bilddaten der Maschine und/oder der beweglichen Maschinenelemente erfasst werden. Bei dem Bilderfassungssystem kann es sich insbesondere um ein multiokulares Kamerasystem handeln, weiterhin werden als mögliche Bilderfassungssysteme LiDAR-, RADAR- oder Ultraschall-Sensoren genannt.

Ein weiteres Anwendungsgebiet der Objekterfassung mittels optoelektronischer Sensoren liegt im Bereich der Verkehrsinfrastruktur, insbesondere der Infrastruktur-zu-Fahrzeug (Infrastructure-to-Vehicle, I2V) Kommunikation. Um hierbei aussagekräftige Daten bereit zu stellen, können die von den optoelektronischen erfassten Daten auf verschiedene Weisen segmentiert werden. Unter "Semantischer Segmentierung" versteht man dabei die Zuordnung der von den optoelektronischen Sensoren erfassten Messpunkten zu einzelnen semantischen Klassen. Semantische Klassen können so genannte "Dinge" (Objekte mit einer klar definierten Form wie beispielsweise ein Auto oder eine Person) oder so genannte "Sachen" (amorphe Hintergrundregionen, beispielsweise eine Straße oder der Himmel) sein. Unter Instanzsegmentierung versteht man die Zuordnung von Messpunkten zu Objektinstanzen sowie zu einer vordefinierten Menge von Objektklassen (Auto 1, Auto 2, Fußgänger 1, etc.). Bei der Instanzsegmentierung werden jedoch nur "Dinge" berücksichtigt. "Sachen" werden im Rahmen der Instanzsegmentierung nicht klassifiziert. Diese Einschränkung der Instanzsegmentierung wird bei der panoptischen Segmentierung aufgehoben. Hier werden sowohl "Dinge" als auch "Sachen" in Instanzen und Klassen eingeteilt.

Die im Stand der Technik üblicherweise zur Objekt- und/oder Personendetektion verwendeten Bilderfassungssysteme, insbesondere Laserscanner und Kamerasysteme, weisen Nachteile auf, auf die im Folgenden näher eingegangen werden soll.

Laserscanner oder LiDAR (Light Detection And Ranging) - Sensoren basieren meist auf einer direkten Lichtlaufzeitmessung. Hierbei wird ein Lichtpuls vom Sensor ausgesandt, an einem Objekt reflektiert und wieder vom Sensor detektiert. Die Laufzeit des Lichtpulses wird vom Sensor bestimmt und über die Lichtgeschwindigkeit im Propagationsmedium (in der Regel Luft) die Entfernung zwischen Sensor und Objekt geschätzt. Da die Phase der elektromagnetischen Welle hierbei nicht berücksichtigt wird, spricht man von einem inkohärenten Messprinzip. Bei einer inkohärenten Messung besteht die Notwendigkeit, Pulse aus vielen Photonen aufzubauen, um den reflektierten Puls mit ausreichendem Signal-Rausch-Verhältnis zu empfangen. Die Anzahl der Photonen innerhalb eines Pulses ist im industriellen Umfeld in der Regel durch den Augenschutz nach oben limitiert. In der Folge ergeben sich Abwägungen zwischen maximaler Reichweite, minimaler Remission des Objektes, Integrationszeit und den Anforderungen an das Signal-Rausch-Verhältnis des Sensorsystems. Inkohärente Strahlung bei gleicher Wellenlänge (Umgebungslicht) wirkt sich zudem direkt auf den dynamischen Bereich des Lichtempfängers aus. Beispiele für inkohärente Strahlung bei gleicher Wellenlänge sind die Sonne, ähnliche Sensorsysteme, oder das identische Sensorsystem über eine Mehrwegeausbreitung, also unerwünschte Reflexionen.

Aus dem Stand der Technik bekannte Kamerasysteme basieren auf Messprinzipien wie beispielsweise der Stereoskopie oder der indirekten Lichtlaufzeitmessung. Bei der indirekten Lichtlaufzeitmessung wird die Phasendifferenz eines AMCW (Amplitude Modulated Continous Wave)-Sendesignals und dessen zeitlich verzögerter Kopie nach Reflektion mit einem Objekt bestimmt. Die Phasendifferenz entspricht der Lichtlaufzeit und kann über die Lichtgeschwindigkeit im Propagationsmedium in einen Distanzwert umgerechnet werden. Sowohl die Stereoskopie als auch die indirekte Lichtlaufzeitmessung sind ebenfalls inkohärente Messverfahren mit den oben genannten Nachteilen.

Millimeterwellenlängen Radarsensoren basieren auf einem frequenz-modulierten-Dauerstrich-Messprinzip (FMCW) und können unter Ausnutzung des Dopplereffekts auch Radialgeschwindigkeiten eines erfassten Objekts bestimmen. Der größte Nachteil von millimeterwellenlängen Radarsensoren im Vergleich zu optischen Technologien ist die deutlich größere Wellenlänge und die damit geringere räumliche Auflösung. Darüber hinaus beschränken regulatorische Bestimmungen die radiale Auflösung durch Beschränkung der Bandbreite und in einem MIMO (Multiple Input Multiple Output) - Radarsystem die Anzahl an verfügbaren virtuellen Antennen (Produkt aus der Anzahl der Sende- und Empfangsantennen) die Winkelauflösung. Geometrische physikalische Merkmale sind daher im Vergleich zu optischen Technologien bei der sicherheitsgerichteten Objekt- und/oder Personendetektion kaum nutzbar.

In der EP 4 030 188 A1 der Anmelderin wird eine Vorrichtung zur Erfassung von Objekten in einem Überwachungsbereich vorgeschlagen, welche als optoelektronischen Sensor einen FMCW-LIDAR-Sensor aufweist und zusätzlich zu den üblichen Parametern Ort und Intensität eines Messpunktes die durch den FMCW-LIDAR-Sensor gemessene Radialgeschwindigkeit des Messpunktes relativ zum Sensor als weiteren Parameter bei der Segmentierung der Messpunkte zu berücksichtigt. Dadurch kann insbesondere bei Objekten mit unterschiedlichen Radialgeschwindigkeiten eine verbesserte Segmentierung erfolgen. Bewegen sich jedoch mehrere Objekte mit gleicher oder ähnlicher Radialgeschwindigkeit, kann dieser Parameter nur noch eingeschränkt zur Segmentierung der Messpunkte beitragen.

Es ist daher Aufgabe der Erfindung, eine Vorrichtung zur Erfassung von Objekten in einem Überwachungsbereich mit einem FMCW-LIDAR-Sensor zu verbessern.

Diese Aufgabe wird durch eine Vorrichtung und ein Verfahren zur Erfassung von Objekten in einem Überwachungsbereich nach Anspruch 1 beziehungsweise 11 gelöst.

Die erfindungsgemäße Vorrichtung weist wenigstens einen optoelektronischen Sensor auf, der als frequenz-modulierter-Dauerstrich (Frequency Modulated Continuous Wave, FMCW) - LiDAR-Sensor ausgebildet ist und beispielsweise an einer Maschine, einem Fahrzeug oder ortsfest angeordnet sein kann. Grundlagen der FMCW-LiDAR Technologie sind beispielsweise in der wissenschaftlichen Veröffentlichung "Linear FMCW Laser Radar for Precision Range and Vector Velocity Measurements" (Pierrottet, D., Amzajerdian, F., Petway, L., Barnes, B., Lockard, G., & Rubio, M. (2008). Linear FMCW Laser Radar for Precision Range and Vector Velocity Measurements. MRS Proceedings, 1076, 1076-K04-06. doi:10.1557/PROC-1076-K04-06) oder der Doktorarbeit "Realization of Integrated Coherent LiDAR" (T. Kim, University of California, Berkeley, 2019. https://escholarship.org/uc/item/1d67v62p) beschrieben.

Im Gegensatz zu einem auf Lichtlaufzeitmessung von Laserpulsen basierenden LiDAR-Sensor sendet ein FMCW-LiDAR-Sensor keine gepulsten, sondern kontinuierliche Sendelichtstrahlen in den Überwachungsbereich aus, die während einer Messung, also einer zeitdiskreten Abtastung eines Messpunktes im Überwachungsbereich, eine vorgegebene Frequenzmodulation, das heißt eine zeitliche Änderung der Wellenlänge des Sendelichts, aufweisen. Die Messfrequenz liegt dabei typischerweise im Bereich von 10 bis 30 Hz. Die Frequenzmodulation kann beispielsweise als periodische Auf- und Abwärtsmodulation ausgebildet sein. Von Messpunkten im Überwachungsbereich reflektiertes oder remittiertes Sendelicht, weist im Vergleich zum ausgestrahlten Sendelicht einen Zeitversatz entsprechend der Lichtlaufzeit auf, die von der Entfernung des Messpunktes vom Sensor abhängt und aufgrund der Frequenzmodulation mit einer Frequenzverschiebung einhergeht. Im FMCW-LiDAR-Sensor werden ausgestrahltes und reflektiertes Sendelicht kohärent überlagert, wobei aus dem Überlagerungssignal die Entfernung des Messpunktes vom Sensor bestimmt werden kann. Das Messprinzip der kohärenten Überlagerung hat im Vergleich zu gepulsten oder amplituden-modulierten inkohärenten LiDAR Messprinzipien unter anderem den Vorteil einer erhöhten Immunität bezüglich Fremdlicht von beispielsweise anderen optischen Sensoren/Sensorsysteme oder der Sonne. Gegenüber Radarsensoren mit Wellenlängen im Bereich von Millimetern verbessert sich die Ortsauflösung, wodurch geometrische Eigenschaften einer Person messbar werden.

Bewegt sich ein Messpunkt mit einer Radialgeschwindigkeit auf den Sensor zu oder vom Sensor weg, weist das reflektierte Sendelicht zusätzlich eine Dopplerverschiebung auf. Diese Veränderung der Sendelichtfrequenz kann ein FMCW-LiDAR-Sensor bestimmen und daraus die Entfernung und die Radialgeschwindigkeit eines Messpunkts in einer einzigen Messung, also einer einmaligen Abtastung eines Messpunktes, bestimmen, während bei einem auf Lichtlaufzeitmessung von Laserpulsen basierenden LiDAR-Sensor für eine Bestimmung der Radialgeschwindigkeit wenigstens zwei Messungen, also zwei zeitlich beabstandete Abtastungen des gleichen Messpunktes, nötig sind.

Der FMCW-LiDAR-Sensor ist weiterhin dazu eingerichtet, polarisationsabhängige Intensitäten des von den Messpunkten reflektierten oder remittierten Sendelichts zu erfassen. Dazu weist der FMCW-LiDAR-Sensor eine Auskopplungseinheit auf, die dazu ausgebildet ist, wenigstens einen Teil des von den Messpunkten im Überwachungsbereich reflektierten oder remittierten Sendelichts, im Folgenden auch als Empfangslicht bezeichnet, auszukoppeln und auf einen Polarisationsanalysator zu leiten, beispielsweise durch einen Strahlteiler mit vorgegebenen Teilungsverhältnis.

Der Polarisationsanalysator ist dazu eingerichtet, die polarisationsabhängigen Intensitäten des Empfangslichts zu messen, beispielsweise durch polarisationsabhängiges Aufteilen des Empfangslichts mit einen polarisierenden Strahlteilerwürfel oder einer Metaoberfläche, und Messen der Intensitäten des aufgeteilten Empfangslichts durch geeignete Detektoren.

Bei zeit- und raumdiskreter Abtastung eines dreidimensionalen Überwachungsbereichs kann ein erfindungsgemäßer FMCW-LiDAR-Sensor somit folgende Messdaten erfassen:

$$M_{j,k,l} = \begin{pmatrix} r_{j,k,l} \\ v^r_{j,k,l} \\ I_{\perp j,k,l} \\ I_{\parallel j,k,l} \end{pmatrix}.$$

Hierbei bezeichnen $r_{j,k,l}$ den Radialabstand, $v^r_{j,k,l}$ die Radialgeschwindigkeit sowie $I_{\perp j,k,l}$ und $I_{\parallel j,k,l}$ die polarisationsabhängigen Intensitäten jedes raumdiskreten Messpunktes $j,k$ mit zweidimensionaler, durch Azimutwinkel $\varphi$ und Polarwinkel $\theta$ angegebener Position $(\varphi_j, \theta_k)$ für jede zeitdiskrete Abtastung $l$. Zur einfachen Lesbarkeit wird im Folgenden der Index $n$ für eine einmalige zeitdiskrete Abtastung eines raumdiskreten, zweidimensionalen Messpunkts $(\varphi_j, \theta_k)$ im dreidimensionalen Überwachungsbereich verwendet.

Zur Auswertung der vom FMCW-LiDAR-Sensor erfassten Messdaten weist die erfindungsgemäße Vorrichtung eine Steuer- und Auswerteeinheit auf, die dazu ausgebildet ist, die Messpunkte unter Verwendung der ortsaufgelösten Radialgeschwindigkeit der Messpunkte und den polarisationsabhängigen Intensitäten des von den Messpunkten reflektierten oder remittierten Sendelichts zu segmentieren und zu Objekten und/oder Objektsegmenten zusammenzufassen. Als Objektsegmente sind dabei einzeln bewegliche Teile eines aus mehreren Teilen bestehenden Objektes zu verstehen, beispielsweise die Gliedmaßen eines menschlichen Körpers, die Komponenten eines Roboterarms oder Räder eines Fahrzeugs.

Die Erfindung hat den Vorteil, dass durch die Verwendung der ortsaufgelösten Radialgeschwindigkeit und den polarisationsabhängigen Intensitäten des von den Messpunkten reflektierten oder remittierten Sendelichts als zusätzlichen Parametern eine verbesserte Segmentierung der Messdaten möglich ist. Diese gilt insbesondere auch für bekannte Segmentierungsverfahren der digitalen Bildverarbeitung oder des maschinellen Sehens.

Die Steuer- und Auswerteeinheit kann weiterhin dazu ausgebildet sein, Radialgeschwindigkeiten der Objekte und/oder Objektsegmente zu bestimmen und Merkmale der Objekte und/oder Objektsegmente zu extrahieren, die auf den Radialgeschwindigkeiten der Objektsegmente basieren. Bei den extrahierten Merkmalen kann es sich beispielsweise um statistische Maße wie Mittelwert oder Standardabweichung, um höhere Momente, oder Histogramme der Radialgeschwindigkeiten der Objekte und/oder Objektsegmente handeln, die charakteristisch für eine Objekt- und/oder Objektsegmentbewegung sein können.

Vorteilhafterweise kann die Steuer- und Auswerteeinheit dazu ausgebildet sein, die auf den Radialgeschwindigkeiten der Objekte und/oder Objektsegmente basierenden Merkmale zu einer Klassifizierung der Objekte und/oder Objektsegmente zu verwenden. Durch diese zusätzlichen Merkmale ist eine verbesserte Klassifizierung der Objekte und/oder der Objektsegmente möglich.

In einer Ausführungsform kann die Steuer- und Auswerteeinheit dazu ausgebildet sein, die Messdaten unter Verwendung der Radialgeschwindigkeiten der Messpunkte zu filtern. Somit kann bereits vor einer Segmentierung der Messpunkte der Rechenaufwand durch Datenreduktion vermindert werden. Eine Filterung kann beispielsweise dadurch erfolgen, dass Messpunkte mit einer Radialgeschwindigkeit kleiner, größer oder gleich einem vorgegebenen Schwellenwert verworfen und keiner weiteren Auswertung zugeführt werden. Beispielsweise können im Falle einer Antikollisionsfunktion Objekte und/oder Objektsegmente, die sich mit dem Sensor bewegen ($v^r = 0$) oder sich vom Sensor entfernen ($v^r > 0$), verworfen werden.

Der FMCW-LiDAR-Sensor kann stationär angeordnet sein und einen vorgegebenen Überwachungsbereich abtasten. Vorzugsweise kann wenigstens ein weiterer FMCW-LiDAR-Sensor vorgesehen sein, der einen weiteren Überwachungsbereich abtastet, wobei sich die Überwachungsbereiche überlappen können. Dadurch können Abschattungen oder tote Winkel, in denen keine Objekterfassung möglich ist, vermieden werden. Werden zwei oder mehrere FMCW-LiDAR Sensoren so zueinander angeordnet, dass orthogonal zueinander stehende Messstrahlen erzeugt werden können, kann durch Verrechnung dieser Messstrahlenpaare ein Geschwindigkeitsvektor eines durch diese Messstrahlen abgetasteten Objekts in der durch die orthogonal zueinander stehenden Messstrahlen aufgespannten Ebene bestimmt werden.

Der FMCW-LiDAR-Sensor kann an einer Maschine angeordnet sein, insbesondere an einem führerlosen Fahrzeug (automated guided vehicle, AGV) oder an einem Roboter. Der Roboter kann sich als Ganzes in Bewegung befinden (mobile robot) oder Bewegungen mittels verschiedener Achsen und Gelenke durchführen. Der Sensor kann dann Bewegungen der Maschine mit vollführen und einen veränderlichen Überwachungsbereich abtasten.

Der Sensor kann vorzugsweise sicher im Sinne der einleitend genannten oder vergleichbarer Normen ausgeführt sein. Die Steuer- und Auswertungseinheit kann in den Sensor integriert oder daran angeschlossen sein, etwa in Form einer Sicherheitssteuerung oder einer übergeordneten Steuerung, die auch mit der Maschinensteuerung kommuniziert. Zumindest Teile der Funktionalität können auch in einem Remote-System oder einer Cloud implementiert sein.

Der Sensor kann vorzugsweise an oder in der Nähe von einem gefahrbringenden Maschinenteil angebracht, wie etwa einer Werkzeugspitze. Wenn es sich beispielsweise um einen Roboter mit vielen Achsen handelt, ist für den Sensor deren Zusammenspiel nicht relevant, da der Sensor einfach die resultierende Bewegung am Ort der Gefahr nachvollzieht.

In einer Weiterbildung der Erfindung können mehrere optoelektronische Sensoren an der Maschine angebracht sein, um die Bewegung von beweglichen Teilen der Maschine zu bestimmen. Damit lassen sich auch komplexe Maschinen überwachen, bei denen eine punktuelle Bestimmung der Bewegung nicht ausreicht. Ein Beispiel ist ein Roboter mit mehreren Roboterarmen und eventuell Gelenken. Mindestens ein stationärer, also nicht mit der Maschine mitbewegter optoelektronischer Sensor, kann die Maschine zusätzlich beobachten.

In einer Ausführungsform der Erfindung kann die Vorrichtung zur Verkehrsüberwachung eingerichtet sein, wobei die Steuer- und Auswerteeinrichtung dazu ausgebildet sein kann, die Messpunkte unter Verwendung der Messdaten, insbesondere der Radialgeschwindigkeiten und der polarisationsabhängigen Intensitäten, Fahrzeugkategorien zuzuordnen und Fahrzeugkategorie-spezifisch auszuwerten, beispielsweise zur Überwachung von Fahrzeugkategorie-spezifischen Geschwindigkeitsbeschränkungen (z.B. 80 km/h für einen LKW und 120 km/h für einen PKW).

In einer Ausführungsform der Erfindung kann die Vorrichtung zur Messung von Geschwindigkeitsüberschreitungen bei niedrigen Geschwindigkeiten, insbesondere bei Geschwindigkeiten unterhalb von 30 km/h, eingerichtet sein.

In einer Ausführungsform der Erfindung kann die Vorrichtung zur Kennzeichenerkennung von Fahrzeugen eingerichtet sein, wobei bei ausreichender räumlicher Auflösung des FMCW-LIDAR-Sensors die Steuer- und Auswerteeinrichtung dazu ausgebildet sein kann, durch die Segmentierung der Messpunkte ein Kennzeichen eines Fahrzeugs ohne weitere kamerabasierte Sensorik zu erfassen. In einer alternativen Ausführungsform zur Kennzeichenerkennung von Fahrzeugen kann die Steuer- und Auswerteeinrichtung dazu ausgebildet sein, bei unzureichender räumlicher Auflösung des FMCW-LIDAR-Sensors eine Kamera zu triggern und deren optimale Integrationszeit entsprechend der Fahrzeuggeschwindigkeit einzustellen, um ein optimales Kamerabild zu generieren.

In einer weiteren Ausführungsform kann die Vorrichtung zur Messung eines Verkehrsflusses eingerichtet sein, wobei die Steuer- und Auswerteeinheit dazu ausgebildet ist, durch Segmentierung der Messpunkte in dynamische und statische Objekte ein Maß für den Verkehrsfluss zu ermitteln, beispielsweise durch Definieren eines statischen Bereichs wie einer Fahrbahn als 2D oder 3D "Region-of-interest" (ROI) im Überwachungsbereich des Sensors und Berechnen einer mittleren Radialgeschwindigkeit aller Messpunkte innerhalb dieser ROI. Die Verkehrsflussmessung kann mit einer Klassifizierung der segmentierten Objekte gekoppelt werden, um so den Verkehrsfluss für verschiedene Klassen von Verkehrsteilnehmern getrennt zu ermitteln.

In einer weiteren Ausführungsform kann die Vorrichtung zur Verfolgung und Trajektorienvorhersage von Verkehrsteilnehmern eingerichtet sein, wobei die Steuer- und Auswerteeinheit dazu ausgebildet ist, Messpunkte Verkehrsteilnehmern zuzuordnen, Trajektorienvorhersagen der Verkehrsteilnehmer unter Verwendung der Radialgeschwindigkeiten der den Verkehrsteilnehmern zugeordneten Messpunkte zu berechnen und die Trajektorienvorhersagen an autonome Fahrzeuge zur Fahrentscheidungsfindung weiterzuleiten. Sind 3D-Geschwindigkeitsvektoren der Verkehrsteilnehmer bekannt, entweder durch Verrechnung von gemessenen Radialgeschwindigkeiten orthogonaler FMCW-LIDAR-Messstrahlpaare oder durch Fusion von Daten weiterer Sensormodalitäten wie beispielsweise Radar, Kamera oder LIDAR-Sensoren, so können diese die Trajektorienvorhersage zusätzlich verbessern.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    ein Beispiel für eine Radialgeschwindigkeitsmessung mit einem FMCW-Li-DAR-Sensor;

Fig. 2    eine schematische Darstellung einer erfindungsgemäßen Vorrichtung zur Überwachung eines Roboters;

Fig. 3    eine schematische Darstellung einer erfindungsgemäßen Vorrichtung zur Verkehrsüberwachung;

Fig. 4    ein Ablaufdiagramm für eine beispielhafte erfindungsgemäße Verarbeitung von Messdaten eines FMCW-LiDAR-Sensors;

Fig. 5    ein beispielhaftes Ablaufdiagramm zur Überwachung einer Bewegung eines Roboters unter Verwendung eines erfindungsgemäßen Verfahrens;

Fig. 6    ein beispielhaftes Ablaufdiagramm zur Vermeidung einer Kollision zweier Fahrzeuge im I2V Umfeld unter Verwendung eines erfindungsgemäßen Verfahrens;

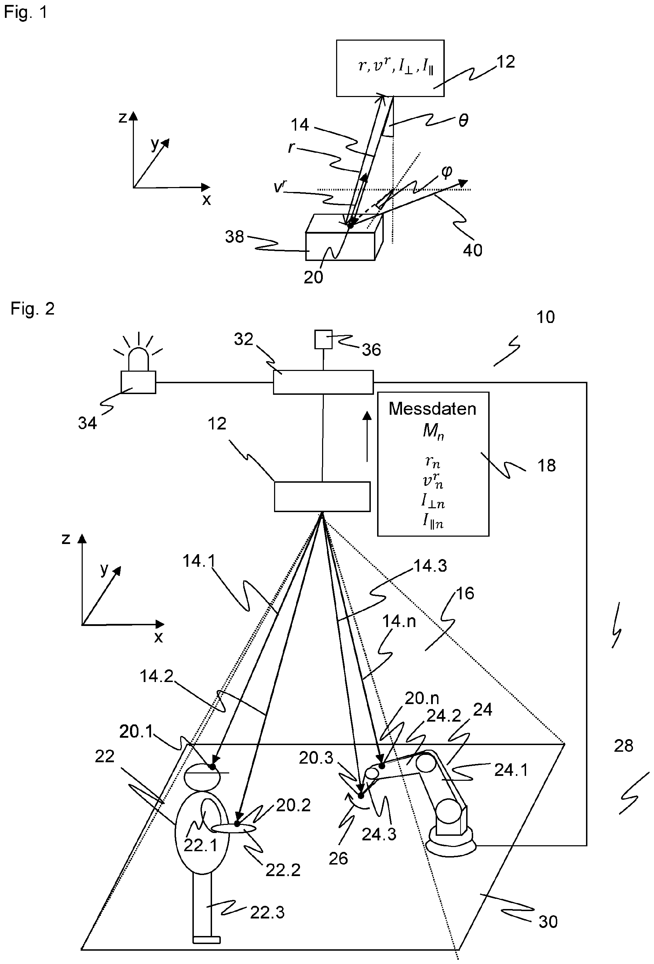

In Figur 1 ist das Konzept der Radialgeschwindigkeitsmessung mit einem FMWC-LIDAR-Sensor 12 an einem dreidimensionalen Beispiel gezeigt. Bewegt sich ein Objekt 38 entlang einer Bewegungsrichtung 40 relativ zum FMCW-LiDAR-Sensor 12, kann der FMCW-LiDAR-Sensor 12 neben dem Radialabstand reines mit einem Sendelichtstrahl 14 unter einem Azimuthwinkel $\varphi$ und einem Polarwinkel $\theta$ einmalig zeitdiskret abgetasteten Messpunkts 20 die Radialgeschwindigkeit $v^r$ des Messpunkts 20 des Objekts 38 in Richtung des FMCW-LiDAR-Sensors 12 bestimmen. Der FMCW-LiDAR-Sensor 12 weist zusätzlich einen Polarisationsanalysator (nicht gezeigt) auf, der dazu eingerichtet ist, polarisationsabhängige Intensitäten $I_\perp$, $I_\parallel$ des vom Messpunkt 20 reflektierten oder remittierten Sendelichtstrahls 14 zu messen.

Diese Informationen (Radialabstand r, Radialgeschwindigkeit $v^r$, polarisationsabhängige Intensitäten $I_\perp$, $I_\parallel$) stehen direkt mit einer Messung, also einer zeitdiskreten Abtastung des Messpunktes 20 zur Verfügung. Zur Identifikation bewegter Objekte entfällt somit im Unterschied zu Messverfahren, die lediglich ortsaufgelöste Radialabstände, also dreidimensionale Positionen, liefern, die Notwendigkeit einer zweiten Messung und insbesondere die Notwendigkeit, in den Messdaten der zweiten Messung zunächst die Messpunkte zu ermitteln, die den Messpunkten der ersten Messung entsprechen.

Im Falle eines statischen FMCW-LiDAR-Sensors ist jeder Messpunkt mit einer Radialgeschwindigkeit von Null in der Regel einem statischen Objekt zugeordnet, sofern sich dieses nicht tangential zum Messstrahl des Sensors bewegt. Aufgrund der endlichen Objektausdehnung und der hohen räumlichen Auflösung des FMCW-LiDAR-Sensors wird praktisch jedes bewegte Objekt wenigstens einen Messpunkt 20 mit einer von Null verschiedenen Radialgeschwindigkeit $v^r_n$ zum FMCW-LiDAR-Sensor 12 aufweisen. Daher lassen sich bereits mit einer Messung des FMCW-LiDAR-Sensors 12 statische und bewegte, beziehungsweise in mobilen Applikationen sich entfernende oder nähernde Objekte unterscheiden. So können beispielsweise bei einer Antikollisionsüberwachung sich entfernende Messpunkte respektive sich entfernende Objekte verworfen werden. Durch eine entsprechende Datenreduktion werden Rechenaufwände bei der weiteren Auswertung der Messdaten reduziert.

Figur 2 zeigt eine schematische Darstellung einer erfindungsgemäßen Vorrichtung 10 zur Überwachung eines Roboters 24. Ein FMCW-LiDAR-Sensor 12 sendet Sendelichtstrahlen 14.1, ..., 14.n in einen dreidimensionalen Überwachungsbereich 16 aus und erzeugt Messdaten $M_n$ 18 aus von Messpunkten 20.1, ..., 20.n im Überwachungsbereich 16 zurück zum FMCW-LiDAR-Sensor 12 reflektiertem oder remittiertem Sendelicht. Zur Darstellung ist eine begrenzte Zahl beispielhafter Sendelichtstrahlen 14.1, ..., 14.n und Messpunkte 20.1, ..., 20.n gezeigt, die tatsächliche Anzahl ergibt sich durch die Größe des Überwachungsbereichs 16 und die räumliche Auflösung der Abtastung. Die Messpunkte 20.1, ..., 20.n können im Überwachungsbereich 16 befindliche Personen 22, Roboter 24, oder auch Grenzen des Überwachungsbereichs wie Böden 30 oder Wände repräsentieren.

Die von der Steuer- und Auswerteeinheit 32 empfangenen Messdaten $M_n$ 18 des FMCW-LiDAR-Sensors 12 umfassen für jede zeitdiskrete Abtastung die Radialabstände $r_n$, der Messpunkte 20.1, ..., 20.n vom FMCW-LiDAR-Sensor 12, die polarisationsabhängigen Intensitäten $I_{\perp n}$, $I_{\parallel n}$ des von den Messpunkten 20.1, ..., 20.n reflektierten oder remittierten Sendelichts und die Radialgeschwindigkeiten $v^r_n$ der Messpunkte 20.1, ..., 20.n, wobei mit Radialgeschwindigkeit $v^r_n$ die Geschwindigkeitskomponente eines Messpunkts 20.1, ..., 20.n bezeichnet wird, mit der sich der Messpunkt 20.1, ..., 20.n auf den FMCW-LiDAR-Sensor 12 zu oder vom FMCW-LiDAR-Sensor 12 weg bewegt.

Die Messdaten $M_n$ 18 werden von einer Steuer- und Auswerteeinheit 32 ausgewertet, wobei die Steuer- und Auswerteeinheit 32 dazu eingerichtet ist, die Messpunkte 20.1, ..., 20.n unter Verwendung der Radialgeschwindigkeiten $v^r_n$, der Messpunkte 20.1, ..., 20.n und der polarisationsabhängigen Intensitäten $I_{\perp n}$, $I_{\parallel n}$, des von den Messpunkten 20.1, ..., 20.n reflektierten oder remittierten Sendelichts zu segmentieren und zu Objektsegmenten 22.1, 22.2, 22.3, 24.1, 24.2, 24.3 und/oder Objekten zusammen zu fassen. Basierend auf der Erfassung kann die Steuer- und Auswerteeinheit 32 ein sicherheitsgerichtetes Signal zum Auslösen einer sicherheitsgerichteten Aktion erzeugen. Bei der sicherheitsgerichteten Aktion kann es sich beispielsweise um die Aktivierung einer Warnleuchte 34 oder das Stoppen des Roboters 24 handeln. Im Ausführungsbeispiel ist die Steuer- und Auswerteeinheit 32 direkt mit der Warnleuchte 34 und dem Roboter 24 verbunden, löst also die sicherheitsgerichtete Aktion selbst aus. Alternativ kann die Steuer- und Auswerteeinheit 32 ein sicherheitsgerichtetes Signal über eine Schnittstelle 36 an eine übergeordnete Sicherheitssteuerung (nicht gezeigt) weitergeben, oder die Steuer- und Auswerteeinheit 32 kann selbst Teil einer Sicherheitssteuerung sein.

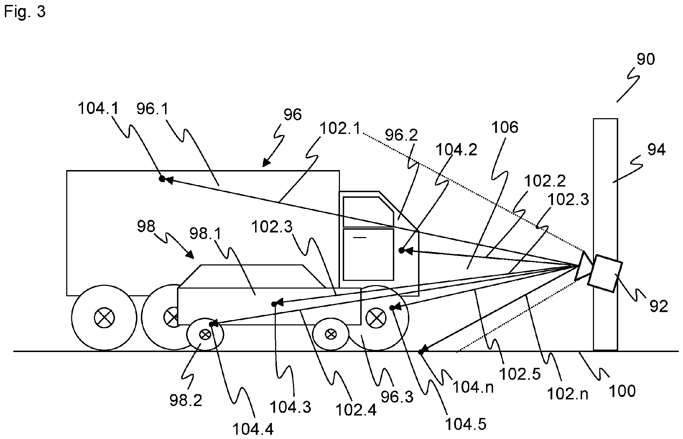

Figur 3 zeigt eine schematische Darstellung einer erfindungsgemäßen Vorrichtung 90 zur Verkehrsüberwachung. Ein FMCW-Lidar-Sensor 92 ist an einer sogenannten Maut- oder Verkehrszeichenbrücke 94 angeordnet, um Fahrzeuge, in diesem Fall einen LKW 96 und einen PKW 98, auf einer Fahrbahn 100 zu erfassen. Der FMCW-LiDAR-Sensor 92 sendet Sendelichtstrahlen 102.1, ..., 102.n in einen dreidimensionalen Überwachungsbereich 106 des Sensors 92 aus und erzeugt Messdaten aus von Messpunkten 104.1, ..., 104.n im Überwachungsbereich 106 zurück zum Sensor 92 reflektiertem oder remittiertem Sendelicht. Der FMCW-LiDAR-Sensor 92 ist so über oder seitlich der zu überwachenden Fahrbahn 100 angeordnet, dass beide Fahrzeuge 96, 98 vom FMCW-LiDAR-Sensor 92 gleichzeitig, also während einer zeitdiskreten Abtastung des Überwachungsbereichs 106 durch den FMCW-LiDAR-Sensor 92, erfasst werden.

Der FMCW-LiDAR-Sensor 92 ist dazu ausgebildet, polarisationsabhängige Intensitäten $I_{\perp n}$, $I_{\parallel n}$ des von den Messpunkten 104.1, ..., 104.n reflektierten oder remittierten Sendelichts zu erfassen, so dass die vom FMCW-LiDAR-Sensor 92 erzeugten Messdaten Radialabstände $r_n$ und Radialgeschwindigkeiten $v^r_n$ der Messpunkte 104.1, ..., 104.n sowie die polarisationsabhängigen Intensitäten $I_{\perp n}$, $I_{\parallel n}$ des von den Messpunkten 104.1, ..., 104.n reflektierten oder remittierten Sendelichts umfassen, wobei mit Radialgeschwindigkeit $v^r_n$ die Geschwindigkeitskomponente eines Messpunkts 104.1, ..., 104.n bezeichnet wird, mit der sich der Messpunkt 104.1, ..., 104.n auf den FMCW-LiDAR-Sensor 92 zu oder vom FMCW-LiDAR-Sensor 92 weg bewegt.

Die Messdaten werden von einer Steuer- und Auswerteeinheit (nicht gezeigt) ausgewertet, wobei die Steuer- und Auswerteeinheit dazu eingerichtet ist, die Messpunkte 104.1, ..., 104.n unter Verwendung der Radialgeschwindigkeiten $v^r_n$ der Messpunkte 104.1, ..., 104.n und der polarisationsabhängigen Intensitäten $I_{\perp n}$, $I_{\parallel n}$, des von den Messpunkten 104.1, ..., 104.n reflektierten oder remittierten Sendelichts zu segmentieren und zu Objektsegmenten, in diesem Fall Fahrzeugteile 96.1, 96.2, 96.3, 98.1, 98.2, und/oder Objekten, in diesem Fall Fahrzeugen 96, 98 zusammen zu fassen.

Bei mit gleicher Geschwindigkeit nebeneinander fahrenden Fahrzeugen 96, 98 wird sich die gemessene Radialgeschwindigkeit $v^r_n$ der Messpunkte 104.1, ..., 104.n nicht oder nur unwesentlich unterscheiden. Durch die Verwendung der polarisationsabhängige Intensitäten $I_{\perp n}$, $I_{\parallel n}$ des von den Messpunkten 104.1, ..., 104.n reflektierten oder remittierten Sendelichts lässt sich die Segmentierung der Messpunkten 104.1, ..., 104.n verbessern, da sich die polarisationsabhängigen Intensitäten $I_{\perp n}$, $I_{\parallel n}$ aufgrund unterschiedlicher Oberflächenbeschaffenheit der Objektsegmente 96.1, 96.2, 96.3, 98.1, 98.2, und/oder Objekte 96, 96 in der Regel unterscheiden.

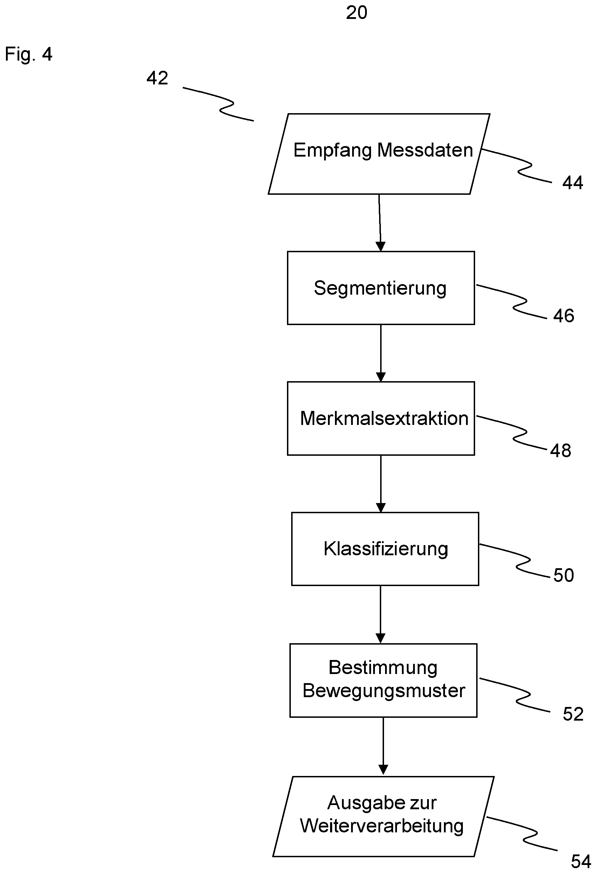

Figur 4 zeigt in einem Ablaufdiagramm 42 eine beispielhafte erfindungsgemäße Verarbeitung der vom FMCW-LiDAR-Sensor erfassten Messdaten durch die Steuer- und Auswerteeinheit. Nach dem Empfang 44 der Messdaten werden in einem Segmentierungsschritt 46 die Messpunkte 20.1, ..., 20.n, 104.1, ..., 104.n segmentiert und zu Objekten 22, 24, 96, 98, 100 und/oder Objektsegmenten 22.1, 22.2, 22.3, 24.1, 24.2, 24.3, 96.1, 96.2, 96.3, 98.1, 98.2 zusammengefasst, wobei zusätzlich zu den üblicherweise zur Segmentierung 46 verwendeten Ortskoordinaten der Messpunkte die ortsaufgelösten Radialgeschwindigkeiten $v^r_n$ der Messpunkte 20.1, ..., 20.n, 104.1, ..., 104.n und die polarisationsabhängigen Intensitäten $I_{\perp n}$, $I_{\parallel n}$ des von den Messpunkten 104.1, ..., 104.n reflektierten oder remittierten Sendelichts berücksichtigt werden. Objektsegmente können beispielsweise einzelne bewegliche Komponenten 24.1, 24.2, 24.3 eines Roboters 24, Körperteile 22.1, 22.2, 22.3 einer Person 22 oder Fahrzeugteile 96.1, 96.2, 96.3, 98.1, 98.2 sein.

Die Segmentierung 46 kann nach bekannten Verfahren der digitalen Bildverarbeitung beziehungsweise des maschinellen Sehens erfolgen, wie beispielsweise

- Pixelorientierte Verfahren im Grauwertbild mittels Schwellenwert-Verfahren,
- Kantenorientierte Verfahren wie dem Sobel- oder Laplace-Operator und einer Gradientensuche,
- Regionenorientierte Verfahren wie "Region-Growing", "Region-Splitting", "Pyramid Linking" oder "Split and Merge",
- Modellbasierte Verfahren wie bspw. die Hough-Transformation, oder
- Texturorientierte Verfahren.

Weiterhin sind unterdem Begriff "Range segmentation" spezielle Verfahren zurSegmentierung von dreidimensionalen Datensätzen bekannt. Die "Range segmentation" ist beispielsweise in den folgenden wissenschaftlichen Veröffentlichungen beschrieben:

- "Fast Range Image-Based Segmentation of Sparse 3D Laser Scans for Online Operation" (Bogoslavskyi et al., 2016 IEEE/RSJ International Conference on Intelligent Robots and Systems, DOI: 10.1109/IROS.2016.7759050)
- "Laser-based segment classification using a mixture of bag-of-words". (Behley et al., 2013 IEEE/RSJ International Conference on Intelligent Robots and Systems, DOI: 10.1109/IROS.2013.6696957)
- "On the segmentation of 3d lidar point clouds" (Douillard et al., 2011 IEEE International Conference on Robotics and Automation, DOI: 10.1109/ICRA.2011.5979818)

Durch die Verwendung der Radialgeschwindigkeit $v^r_n$ zusätzlich zum Radialabstand $r_n$ und der Intensität $I_n$ der Messpunkte 20.1, ..., 20.n, 104.1, ..., 104.n kann die Segmentierung 46 der Messpunkte 20.1, ..., 20.n, 104.1, ..., 104.n mit den oben aufgeführten Verfahren effizienter und genauer erfolgen. Beispielsweise können Messpunkte 20.1, ..., 20.n, 104.1, ..., 104.n mit Radialgeschwindigkeiten $v^r_n$ kleiner, größer oder gleich einem vorgegebenen Schwellenwert verworfen und keiner weiteren Auswertung zugeführt werden. Im Falle einer Antikollisionsfunktion können beispielsweise Messpunkte eines Objekts und/oder Objektsegments, die sich mit dem Sensor bewegen ($v^r = 0$) oder sich vom Sensor entfernen ($v^r > 0$), verworfen werden. Wird ein Objekt und/oder Objektsegment durch mehrere raumdiskrete Messpunkte abgetastet und sind die dazugehörigen Radialgeschwindigkeiten unterscheidbar, können statische und dynamische Objekte und/oder Objektsegmente unterschieden werden und so stationäre Objekte und/oder Objektsegmente wie Böden 30, Fahrbahn 100 oder Wände bereits vor beziehungsweise während der Segmentierung 46 der Messpunkte 20.1, ..., 20.n, 104.1, ..., 104.n verworfen und der Rechenaufwand durch Datenreduktion vermindert werden. Durch die Verwendung der polarisationsabhängigen Intensitäten $I_\perp$, $I_\parallel$ des von den Messpunkten 20.1, ..., 20.n, 104.1, ..., 104.n reflektierten oder remittierten Sendelichts können die Messpunkte mit 20.1, ..., 20.n, 104.1, ..., 104.n auch dann genauer segmentiert werden, wenn sie ähnliche oder gleiche Radialgeschwindigkeiten $v^r_n$ aufweisen.

Im nächsten Schritt erfolgt eine Merkmalsextraktion 48 der während der Segmentierung 46 definierten Objekte 22, 24, 30, 96, 98 und/oder Objektsegmente 22.1, 22.2, 22.3, 24.1, 24.2, 24.3, 96.1, 96.2, 96.3, 98.1, 98.2. Typische Merkmale, die bei der Verarbeitung der Messdaten aus den Objekten 22, 24, 30, 96 und/oder Objektsegmenten 22.1, 22.2, 22.3, 24.1, 24.2, 24.3, 96.1, 96.2, 96.3, 98.1, 98.2 extrahiert werden können, sind beispielsweise Breite, Anzahl der Messpunkte oder Länge des Umfangs der Objekte und/oder Objektsegmente, oder weitere Merkmale, wie sie beispielsweise in der wissenschaftlichen Veröffentlichung "A Layered Approach to People Detection in 3D Range Data" (Spinello et al., Proceedings of the Twenty-Fourth AAAI Conference on Artificial Intelligence, AAAI 2010) beschrieben sind. Erfindungsgemäß können diese Merkmale um Merkmale, die auf den Radialgeschwindigkeiten der Objekte 22, 24, 30, 96 und/oder der Objektsegmente 22.1, 22.2, 22.3, 24.1, 24.2, 24.3, 96.1, 96.2, 96.3, 98.1, 98.2 basieren, erweitert werden. Dazu werden zunächst Radialgeschwindigkeiten der Objekte und/oder Objektsegmente bestimmt, beispielsweise durch Anwendung trigonometrischer Funktionen auf die Radialgeschwindigkeiten der das jeweilige Objekt und/oder Objektsegment repräsentierenden Messpunkte. Als zusätzliche Objekt- und/oder Objektsegmentmerkmale können dann beispielsweise statistische Maße der Radialgeschwindigkeiten der Objekte und/oder Objektsegmente wie Mittelwert, Standardabweichung, höhere Momente oder Histogramme, welche charakteristisch für eine Roboter- und/oder Personenbewegungen sind, verwendet werden.

Nach der Merkmalsextraktion 48 erfolgt eine Klassifizierung 50 der Objekte 22, 24, 96 und/oder Objektsegmente 22.1, 22.2, 22.3, 24.1, 24.2, 24.3, 96.1, 96.2, 96.3, 98.1, 98.2 mit bekannten Klassifizierungsverfahren wie beispielsweise Bayes-Klassifikatoren, Support Vector Machines oder künstlichen neuronalen Netzen. Im Rahmen der Klassifizierung wird der Merkmalsraum nach Gruppen von Merkmalen durchsucht, die ein Objekt definieren. Hierbei können die oben aufgeführten statistischen Maße der Radialgeschwindigkeit einzelner Objekte 22, 24, 30, 96, 98, 100 und/oder Objektsegmente 22.1, 22.2, 22.3, 24.1, 24.2, 24.3, 96.1, 96.2, 96.3, 98.1, 98.2 in Kombination mit a priori Informationen verwendet werden, um Merkmalsräume zu definieren, die beispielsweise Personen 22 oder Fahrzeuge 96 aufgrund ihrer Radialgeschwindigkeit klassifizieren und somit unterscheiden können.

In einem weiteren Schritt 52 erfolgt nun die Bestimmung eines Bewegungsmusters wenigstens eines der Objektsegmente 22.1, 22.2, 22.3, 24.1, 24.2, 24.3, 96.1, 96.2, 96.3, 98.1, 98.2 unter Verwendung der Radialgeschwindigkeiten der dem wenigstens einem Objektsegment zugeordneten Messpunkte 20.1, ..., 20.n, 104.1, ..., 104.n.

Das Ergebnis der Bestimmung des Bewegungsmusters 52 kann nach der Ausgabe 54 von der Steuer -und Auswerteeinheit 32 weiterverarbeitet werden, beispielsweise zur Erzeugung eines sicherheitsgerichteten Signals, zur Zustandserkennung eines Objektssegments oder über die Schnittstelle 36 an eine übergeordnete Steuerung (nicht gezeigt) weitergegeben werden.

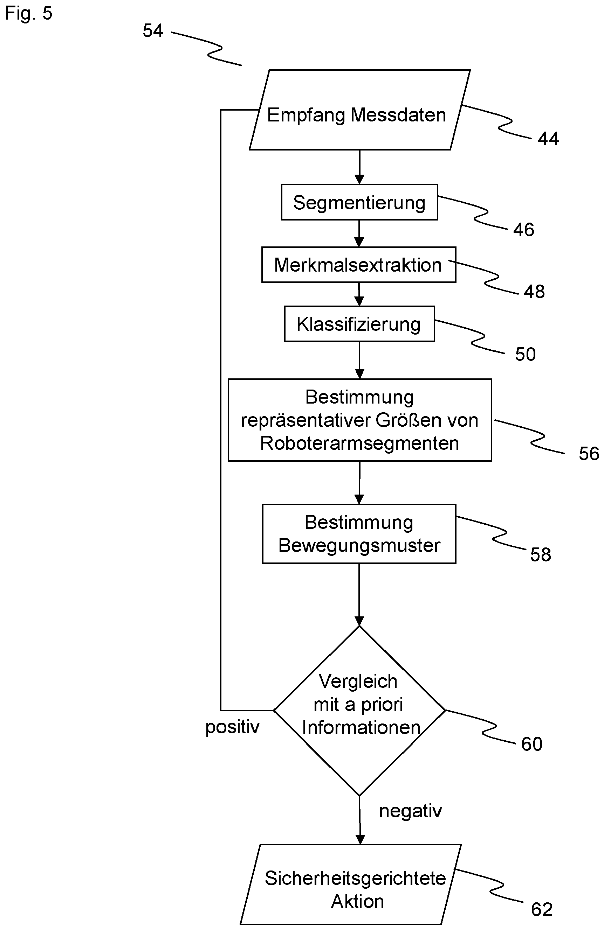

Figur 5 zeigt ein beispielhaftes Ablaufdiagramm 54 zur Überwachung einer Bewegung eines Roboters unter Verwendung eines erfindungsgemäßen Verfahrens. Nach Empfang 44 der Messdaten $M_n$ erfolgen wie oben beschrieben die Schritte Segmentierung 46 der Messdaten $M_n$, Merkmalsextraktion 48 und Klassifizierung 50. Für bei der Klassifizierung 50 identifizierte Segmente 24.1, 24.2, 24.3 des Roboterarms erfolgt eine Bestimmung 56 repräsentativer Größen wie Radialabstände, Intensitäten und Radialgeschwindigkeiten der Segmente 24.1, 24.2, 24.3.

Auf Basis der gemessenen Radialgeschwindigkeiten der den zuvor klassifizierten Segmenten 24.1, 24.2, 24.3 zugeordneten Messpunkte erfolgt eine Erkennung eines Bewegungsmusters 58. Im Gegensatz zur typischen Bestimmung eines "Rigid Scene Flow" auf Basis von 3D Positionsdaten wie beispielsweise in

- Dewan, Ayush, et al. "Rigid scene flow for 3d lidar scans." 2016 IEEE/RSJ International Conference on Intelligent Robots and Systems (IROS). IEEE, 2016.

oder

- Liu, Xingyu, Charles R. Qi, and Leonidas J. Guibas. "Flownet3d: Learning scene flow in 3d point clouds." Proceedings of the IEEE Conference on Computer Vision and Pattern Recognition, 2019.

beschrieben, können die gemessenen Radialgeschwindigkeitswerte direkt zur Erkennung eines Bewegungsmusters verwendet werden, so dass insbesondere zwei zeitlich aufeinanderfolgende Abtastungen $M_{n,l}$ und $M_{n,l-1}$

des Überwachungsbereichs nicht zwingend notwendig sind. In einem Vergleichsschritt 60 erfolgt ein Vergleich des Bewegungsmusters 58 mit a priori Informationen über erwartete Soll-Bewegungen der Segmente 24.1, 24.2., 24.3 des Roboterarms. Bei negativem Ergebnis des Vergleichs 60 (beispielsweise Bewegungsabweichung über ein vorgegebenes Toleranzmaß) wird eine sicherheitsgerichtete Aktion 62, beispielsweise ein Abschalten des Roboters 24 eingeleitet.

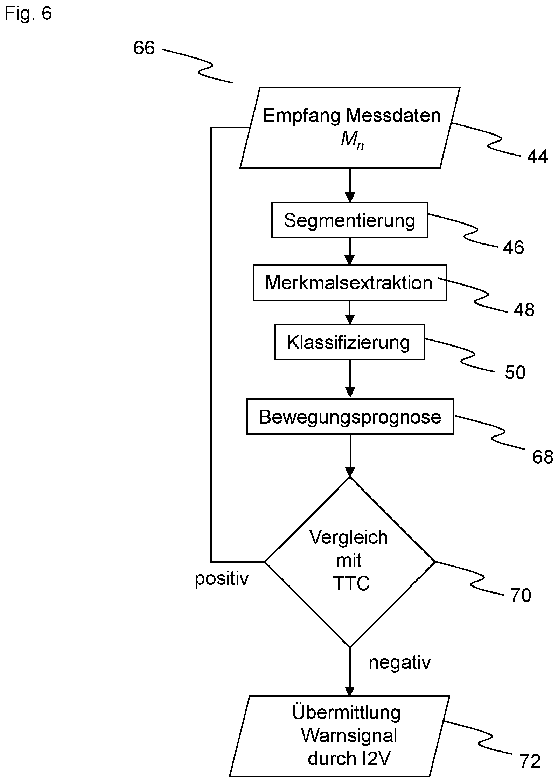

Figur 6 zeigt ein beispielhaftes Ablaufdiagramm 66 zur Vermeidung einer Kollision zweier Fahrzeuge 96, 98 im I2V Umfeld unter Verwendung eines erfindungsgemäßen Verfahrens. Nach Empfang 44 der Messdaten $M_n$ vom FMCW-LIDAR-Sensor 92 erfolgen wie oben beschrieben die Schritte Segmentierung 46 der Messdaten, Merkmalsextraktion 48 und Klassifizierung 50, um Fahrzeugteile 96.1, 96.2, 96.3, 98.1, 98.2, und/oder Objekten, und/oder die Fahrzeuge 96, 98 selbst zu identifizieren. Im folgenden Schritt erfolgt eine Bewegungsprognose 68 der Fahrzeugteile 96.1, 96.2, 96.3, 98.1, 98.2, und/oder der Fahrzeuge 96, 98 mittels eines Kalman-Filters. Im Vergleich zu beispielsweise aus der Radartechnik bekannten Implementierungen eines Kalman-Filters verbessert die höhere räumliche Auflösung eines FMCW-LiDARs deren Performanz. Aus den prognostizierten Bewegungen kann beispielsweise eine Time-To-Collision (TTC) als quantitatives Maß für die Kollisionsgefahr bestimmt werden 70 und bei einem negativen Vergleichsergebnis, beispielsweise einer Kollisionsgefahr, im Rahmen der Infrastructure to Vehicle (I2V) Kommunikation ein Warnsignal an die Fahrzeuge 96, 98 übermittelt werden.

**Patentansprüche**

1. Vorrichtung (10, 90) zur Erfassung von Objekten (22, 24, 30, 96, 98, 100) in einem Überwachungsbereich (16, 106) mit

    - wenigstens einem FMCW-LiDAR-Sensor (12, 92) zum Aussenden von Sendelichtstrahlen (14, ..., 14.n, 102.1, ..., 102.n) in den Überwachungsbereich (16, 106), zum Abtasten einer Vielzahl von Messpunkten (20.1, ..., 20n, 104.1, ..., 104.n) und zum Erzeugen von Messdaten (18) aus von den Messpunkten (20.1, ..., 20n, 104.1, ..., 104.n) remittiertem oder reflektiertem Sendelicht, wobei die Messdaten (18) Radialgeschwindigkeiten ($v^r_n$) der Messpunkte (20.1, ..., 20n, 104.1, ..., 104.n) umfassen, sowie
    - einer Steuer- und Auswerteeinheit (32) zur Auswertung der Messdaten (18), **dadurch gekennzeichnet,**

    **dass** der FMCW-LiDAR-Sensor (12, 92) dazu eingerichtet ist, polarisationsabhängige Intensitäten ($I_{\perp n}$, $I_{\parallel n}$) des von den Messpunkten (20.1, ..., 20n, 104.1, ..., 104.n) remittierten oder reflektierten Sendelichts zu erfassen, die Messdaten (18) die polarisationsabhängigen Intensitäten ($I_{\perp n}$, $I_{\parallel n}$) umfassen, und die Steuer- und Auswerteeinheit (32) dazu ausgebildet ist, die Messpunkte (20.1, ..., 20n, 104.1, ..., 104.n) unter Verwendung der Radialgeschwindigkeiten ($v^r_n$) und der polarisationsabhängigen Intensitäten ($I_{\perp n}$, $I_{\parallel n}$) zu segmentieren und zu Objekten (22, 24, 30, 96, 98, 100) und/oder Objektsegmenten (22.1, 22.2, 22.3, 24.1, 24.2, 24.3, 96.1, 96.2, 96.3, 98.1, 98.2) zusammenzufassen.

2. Vorrichtung nach einem der vorhergehenden Ansprüche, wobei die Steuer- und Auswerteeinheit (32) dazu ausgebildet ist, die Messpunkte (20.1, ..., 20n, 104.1, ..., 104.n) unter Verwendung der polarisationsabhängigen Intensitäten ($I_{\perp n}$, $I_{\parallel n}$) des von den Messpunkten (20.1, ..., 20n, 104.1, ..., 104.n) remittierten oder reflektierten Sendelichts und/oder der Radialgeschwindigkeit ($v^r_n$) der Messpunkte (20.1, ..., 20n, 104.1, ..., 104.n) zu filtern.

3. Vorrichtung nach Anspruch 1 oder 2, wobei die Steuer- und Auswerteeinheit (32) dazu ausgebildet ist, Radialgeschwindigkeiten der Objekte (22, 24, 30, 96, 98, 100) und/oder Objektsegmente (22.1, 22.2, 22.3, 24.1, 24.2, 24.3, 96.1, 96.2, 96.3, 98.1, 98.2) zu bestimmen und Merkmale der Objekte (22, 24, 30, 96, 98, 100) und/oder Objektsegmente unter Verwendung der Radialgeschwindigkeiten der Objekte (22, 24, 30, 96, 98, 100) und/oder Objektsegmente (22.1, 22.2, 22.3, 24.1, 24.2, 24.3, 96.1, 96.2, 96.3, 98.1, 98.2) zu extrahieren (48).

4. Vorrichtung nach Anspruch 3, wobei die Steuer- und Auswerteeinheit (32) dazu ausgebildet ist, die Objekte (22, 24, 30, 96, 98, 100) und/oder Objektsegmente (22.1, 22.2, 22.3, 24.1, 24.2, 24.3, 96.1, 96.2, 96.3, 98.1, 98.2) unter Verwendung der Radialgeschwindigkeiten der Objekte (22, 24, 30, 96, 98, 100) und/oder Objektsegmente (22.1, 22.2, 22.3, 24.1, 24.2, 24.3, 96.1, 96.2, 96.3, 98.1, 98.2) zu klassifizieren (50).

5. Vorrichtung nach einem der vorhergehenden Ansprüche, wobei die Steuer- und Auswerteeinheit (32) dazu ausgebildet ist, Messpunkte (20.1, ..., 20n, 104.1, ..., 104.n) mit einer Radialgeschwindigkeit ($v^r_n$) unter einem vorgegebenen Schwellenwert für die Auswertung zu verwerfen.

6. Vorrichtung nach einem der vorhergehenden Ansprüche, wobei der FMCW-LiDAR-Sensor (12) stationär ist.

7. Vorrichtung nach Anspruch 6, wobei die Vorrichtung wenigstens einen weiteren FMCW-LiDAR-Sensor mit einem weiteren Überwachungsbereich aufweist und sich der Überwachungsbereich (16) mit dem weiteren Überwachungsbereich zumindest teilweise überschneidet.

8. Vorrichtung nach einem der Ansprüche 1 bis 5, wobei der FMCW-LiDAR-Sensor (12) beweglich ist.

9. Vorrichtung nach Anspruch 8 wobei der FMCW-Li-DAR-Sensor (12) auf einem Roboterarm (24.1, 24.2, 24.3) befestigt ist.

10. Vorrichtung nach Anspruch 9 wobei der FMCW-Li-DAR-Sensor (12) auf einem fahrerlosen Transportfahrzeug (26) befestigt ist.

11. Verfahren zur Erfassung von Objekten (22, 24, 30, 96, 98, 100) in einem Überwachungsbereich (16) mit den Schritten:

 - Aussenden von Sendelichtstrahlen (14, ..., 14.n, 102.1, ..., 102.n) in den Überwachungsbereich (16) mit wenigstens einem FMCW-LiDAR-Sensor (12),
 - Abtasten einer Vielzahl von Messpunkten (20.1, ..., 20n, 104.1, ..., 104.n)im Überwachungsbereich (16),
 - Erzeugen von Messdaten (18) aus von den Messpunkten 20, 20.1, 20.2, 20.3, 20.n) remittiertem oder reflektiertem Sendelicht, wobei die Messdaten Radialgeschwindigkeiten ($v^r_n$) der Messpunkte (20.1, ..., 20n, 104.1, ..., 104.n)und polarisationsabhängige Intensitäten ($I_{\perp n}$, $I_{\parallel n}$) des von den Messpunkten (20.1, ..., 20n, 104.1, ..., 104.n) remittierten oder reflektierten Sendelichts umfassen, und - Auswerten der Messdaten, wobei die Messpunkte (20.1, ..., 20n, 104.1, ..., 104.n) unter Verwendung der Radialgeschwindigkeiten ($v^r_n$) der Messpunkte 20, 20.1, 20.2, 20.3, 20.n) und der polarisationsabhängigen Intensitäten ($I_{\perp n}$, $I_{\parallel n}$) des von den Messpunkten (20.1, ..., 20n, 104.1, ..., 104.n) remittierten oder reflektierten Sendelichts segmentiert und zu Objekten (22, 24, 30, 96, 98, 100) und/oder Objektsegmenten (22.1, 22.2, 22.3, 24.1, 24.2, 24.3, 96.1, 96.2, 96.3, 98.1, 98.2) zusammengefasst werden.

12. Verfahren nach Anspruch 11 mit den weiteren Schritten:

 - Bestimmen von Radialgeschwindigkeiten der Objekte (22, 24, 30, 96, 98, 100) und/oder Objektsegmente (22.1, 22.2, 22.3, 24.1, 24.2, 24.3, 96.1, 96.2, 96.3, 98.1, 98.2), und
 - Extrahieren (48) von Merkmalen der Objekte (22, 24, 30, 96, 98, 100) und/oder Objektsegmente (22.1, 22.2, 22.3, 24.1, 24.2, 24.3, 96.1, 96.2, 96.3, 98.1, 98.2) unter Verwendung der Radialgeschwindigkeiten der Objekte (22, 24, 30, 96, 98, 100) und/oder Objektsegmente (22.1, 22.2, 22.3, 24.1, 24.2, 24.3, 96.1, 96.2, 96.3, 98.1, 98.2).

13. Verfahren nach Anspruch 12 mit dem weiteren Schritt:

 - Klassifizieren (50) der Objekte (22, 24, 30, 96, 98, 100) und/oder Objektsegmente (22.1, 22.2, 22.3, 24.1, 24.2, 24.3, 96.1, 96.2, 96.3, 98.1, 98.2) unter Verwendung der Radialgeschwindigkeiten der Objekte (22, 24, 30, 96, 98, 100) und/oder Objektsegmente (22.1, 22.2, 22.3, 24.1, 24.2, 24.3, 96.1, 96.2, 96.3, 98.1, 98.2).

14. Verfahren nach einem der Ansprüche 11 bis 13, mit dem weiteren Schritt:

 - Filtern der Messpunkte (20.1, ..., 20n, 104.1, ..., 104.n) unter Verwendung der Radialgeschwindigkeit ($v^r_n$) der Messpunkte (20.1, ..., 20n, 104.1, ..., 104.n) und/oder der polarisationsabhängigen Intensitäten ($I_{\perp n}$, $I_{\parallel n}$) des von den Messpunkten (20.1, ..., 20n, 104.1, ..., 104.n) remittierten oder reflektierten Sendelichts.

15. Verfahren nach Anspruch 14, wobei Messpunkte (20.1, ..., 20n, 104.1, ..., 104.n) mit einer Radialgeschwindigkeit ($v^r_n$) unter einem vorgegebenen Schwellenwert für die Auswertung verworfen werden.

Fig. 1

$$r, v^r, I_\perp, I_\parallel$$ 12

14

$\theta$

$r$

$v^r$

$\varphi$

38

20

40

Fig. 2

10

34

32

36

Messdaten

$M_n$

$r_n$
$v_n^r$
$I_{\perp n}$
$I_{\parallel n}$

12

18

14.1

14.3

14.2

16

14.n

20.1

20.n

24.2

24

22

20.3

24.1

22.1

20.2

26

24.3

22.2

28

22.3

30

Fig. 3

20

Fig. 4

42

```
┌─────────────────────────┐
│    Empfang Messdaten     │          44
└─────────────────────────┘
             │
             ▼
┌─────────────────────────┐
│      Segmentierung       │          46
└─────────────────────────┘
             │
             ▼
┌─────────────────────────┐
│    Merkmalsextraktion    │          48
└─────────────────────────┘
             │
             ▼
┌─────────────────────────┐
│      Klassifizierung     │          50
└─────────────────────────┘
             │
             ▼
┌─────────────────────────┐
│       Bestimmung         │          52
│     Bewegungsmuster      │
└─────────────────────────┘
             │
             ▼
┌─────────────────────────┐
│      Ausgabe zur         │          54
│   Weiterverarbeitung     │
└─────────────────────────┘
```

Fig. 5

54

Empfang Messdaten — 44

Segmentierung — 46

Merkmalsextraktion — 48

Klassifizierung — 50

Bestimmung repräsentativer Größen von Roboterarmsegmenten — 56

Bestimmung Bewegungsmuster — 58

Vergleich mit a priori Informationen — 60

positiv

negativ

Sicherheitsgerichtete Aktion — 62

Fig. 6

66

```
        ┌─────────────────────┐
        │  Empfang Messdaten  │
        │        Mₙ           │──── 44
        └─────────────────────┘
                  │
                  ▼
        ┌─────────────────────┐
        │   Segmentierung     │──── 46
        └─────────────────────┘
                  │
                  ▼
        ┌─────────────────────┐
        │  Merkmalsextraktion │──── 48
        └─────────────────────┘
                  │
                  ▼
        ┌─────────────────────┐
        │   Klassifizierung   │──── 50
        └─────────────────────┘
                  │
                  ▼
        ┌─────────────────────┐
        │  Bewegungsprognose  │──── 68
        └─────────────────────┘
                  │
                  ▼
              ◇ Vergleich
      positiv   mit         ──── 70
                TTC
                  │
               negativ
                  ▼
        ┌─────────────────────┐
        │    Übermittlung     │
        │     Warnsignal      │──── 72
        │     durch I2V       │
        └─────────────────────┘
```

Europäisches
Patentamt

European
Patent Office

Office européen
des brevets

# EUROPÄISCHER RECHERCHENBERICHT

**Nummer der Anmeldung**

EP 22 18 6057

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2018 125736 A1 (SICK AG [DE]) 23. April 2020 (2020-04-23) * Absätze [0013], [0020] – [0022], [0031], [0032], [0037], [0049] – [0053], [0055] – [0058] * ----- | 1-15 | INV. G01S7/499 F16P3/14 G01S17/34 G01S17/42 G01S17/58 G01S17/89 |
| Y | US 2022/137227 A1 (ARMSTRONG-CREWS NICHOLAS [US] ET AL) 5. Mai 2022 (2022-05-05) * Absätze [0022], [0025], [0029], [0040], [0041], [0048] * ----- | 1-15 | |
| Y | US 2022/153297 A1 (CHEN MINGCHENG [US] ET AL) 19. Mai 2022 (2022-05-19) * Absatz [0069]; Abbildung 9 * ----- | 2 | |
| Y | DE 10 2010 036775 A1 (SICK AG [DE]) 2. Februar 2012 (2012-02-02) * Absätze [0004], [0036]; Abbildung 2 * ----- | 6,7 | |

**RECHERCHIERTE SACHGEBIETE (IPC)**

G01S
F16P

Der vorliegende Recherchenbericht wurde für alle Patentansprüche erstellt

| Recherchenort | Abschlußdatum der Recherche | Prüfer |
|---|---|---|
| München | 3. Januar 2023 | Metz, Carsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 18 6057

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-01-2023

| Im Recherchenbericht angeführtes Patentdokument | Datum der Veröffentlichung | Mitglied(er) der Patentfamilie | Datum der Veröffentlichung |
|---|---|---|---|
| DE 102018125736 A1 | 23-04-2020 | CN 111059454 A | 24-04-2020 |
| | | DE 102018125736 A1 | 23-04-2020 |
| | | EP 3640523 A1 | 22-04-2020 |
| | | US 2020122329 A1 | 23-04-2020 |
| US 2022137227 A1 | 05-05-2022 | US 2022137227 A1 | 05-05-2022 |
| | | WO 2022094430 A1 | 05-05-2022 |
| US 2022153297 A1 | 19-05-2022 | CN 114518113 A | 20-05-2022 |
| | | US 2022153297 A1 | 19-05-2022 |
| DE 102010036775 A1 | 02-02-2012 | DE 102010036775 A1 | 02-02-2012 |
| | | EP 2413159 A1 | 01-02-2012 |
| | | US 2012026294 A1 | 02-02-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007007576 A1
- DE 19843602 A1
- US 9804576 B2
- DE 102006048163 B4
- EP 4030188 A1

**In der Beschreibung aufgeführte Nicht-Patentliteratur**

- **PIERROTTET, D. ; AMZAJERDIAN, F. ; PETWAY, L. ; BARNES, B. ; LOCKARD, G. ; RUBIO, M.** *Linear FMCW Laser Radar for Precision Range and Vector Velocity Measurements,* 2008
- Linear FMCW Laser Radar for Precision Range and Vector Velocity Measurements. *MRS Proceedings,* Oktober 1976
- **T. KIM.** Realization of Integrated Coherent LiDAR. University of California, 2019
- **BOGOSLAVSKYI et al.** Fast Range Image-Based Segmentation of Sparse 3D Laser Scans for Online Operation. *IEEE/RSJ International Conference on Intelligent Robots and Systems,* 2016
- **BEHLEY et al.** Laser-based segment classification using a mixture of bag-of-words. *IEEE/RSJ International Conference on Intelligent Robots and Systems,* 2013
- **DOUILLARD et al.** On the segmentation of 3d lidar point clouds. *IEEE International Conference on Robotics and Automation,* 2011
- **SPINELLO et al.** A Layered Approach to People Detection in 3D Range Data. *Proceedings of the Twenty-Fourth AAAI Conference on Artificial Intelligence, AAAI,* 2010
- **DEWAN ; AYUSH et al.** Rigid scene flow for 3d lidar scans. *IEEE/RSJ International Conference on Intelligent Robots and Systems (IROS). IEEE,* 2016
- **LIU, XINGYU ; CHARLES R. QI ; LEONIDAS J. GUIBAS.** Flownet3d: Learning scene flow in 3d point clouds. *Proceedings of the IEEE Conference on Computer Vision and Pattern Recognition,* 2019